# FASCICULE DE BREVET EUROPEEN

(11) **EP 3 745 350 B1**
(45) Date de publication et mention de la délivrance du brevet: **08.09.2021**
(21) Numéro de dépôt: 20175324.1
(22) Date de dépôt: 19.05.2020
(51) Int. Cl.: G06T 7/00

(54) **PROCÉDÉ DE DÉTECTION DE PRÉCIPITÉS DANS UN ALLIAGE PAR TRAITEMENT D'IMAGE**
VERFAHREN ZUR ERKENNUNG VON PRÄZIPITATIONEN IN EINER LEGIERUNG DURCH BILDVERARBEITUNG
METHOD OF DETECTING PRECIPITATES IN AN ALLOY BY IMAGE PROCESSING

(30) Priorité: 28.05.2019 FR 1905622
(43) Date de publication de la demande: 02.12.2020
(73) Titulaire: Commissariat à l'énergie atomique et aux énergies alternatives, 75015 Paris (FR)
(72) Inventeur: GARRIC, Victor, 91300 MASSY (FR)
(74) Mandataire: Brevalex

(56) Documents cités:
- MACSLEYNE J ET AL: "Three-dimensional analysis of secondary @c^' precipitates in Rene-88 DT and UMF-20 superalloys", ACTA MATERIALIA, ELSEVIER, OXFORD, GB, vol. 57, no. 20, 1 décembre 2009 (2009-12-01), pages 6251-6267, XP026722308, ISSN: 1359-6454, DOI: 10.1016/J.ACTAMAT.2009.08.053 [extrait le 2009-09-24]
- LANDIS HUFFMAN ET AL: "Shape priors for MAP segmentation of alloy micrographs using graph cuts", STATISTICAL SIGNAL PROCESSING WORKSHOP (SSP), 2011 IEEE, 1 juin 2011 (2011-06-01), pages 661-664, XP055642008, DOI: 10.1109/SSP.2011.5967788 ISBN: 978-1-4577-0569-4
- SMITH T M ET AL: "A quantifiable and automated volume fraction characterization technique for secondary and tertiary [gamma]' precipitates in Ni-based superalloys", MATERIALS CHARACTERIZATION, ELSEVIER, NEW YORK, NY, US, vol. 140, 3 avril 2018 (2018-04-03), pages 86-94, XP085395467, ISSN: 1044-5803, DOI: 10.1016/J.MATCHAR.2018.03.051

## Description

### DOMAINE TECHNIQUE

L'invention se situe dans le domaine de la caractérisation de matériaux par analyse d'image. Elle s'applique notamment à la détection de précipités dans un alliage par analyse d'une image bidimensionnelle obtenue par microscopie électronique en transmission. L'invention concerne un tel procédé de détection, un dispositif de détection et un programme d'ordinateur associés, ainsi qu'un procédé de détermination d'une propriété mécanique d'un alliage mettant en œuvre ledit procédé de détection.

### ÉTAT DE LA TECHNIQUE ANTÉRIEURE

La détermination des propriétés mécaniques d'un matériau peut être effectuée de manière classique par différents essais mécaniques tels que des essais de traction. Ces propriétés peuvent être liées à des propriétés microstructurales qui peuvent être quantifiées. En particulier, pour les alliages à durcissement structural, les propriétés mécaniques sont fortement corrélées à la densité de précipités dans cet alliage. Des recherches sont actuellement en cours pour établir des relations biunivoques entre des propriétés mécaniques d'un alliage et une densité de précipités dans cet alliage. La densité de précipités dans un alliage est typiquement déterminée à partir d'une image générée par microscopie électronique en transmission. Une telle image présente généralement un fond dont le niveau de gris et le contraste sont inhomogènes, notamment à fort grandissement ou en champs sombres. Cette inhomogénéité rend délicate voire impossible toute opération automatisée de traitement d'image, comme le seuillage. En outre, d'un échantillon de matériau à un autre, les images microscopiques peuvent présenter de fortes disparités. À l'heure actuelle, l'analyse des images microscopiques est donc réalisée de façon entièrement manuelle, par exemple à l'aide de papier calque, ou de façon assistée par ordinateur, par exemple à l'aide d'une tablette graphique permettant le pointage des précipités. Cette opération d'analyse d'image est consommatrice de temps et soumise à des erreurs humaines, par omission ou défaut d'interprétation.

Les articles "Shape priors for MAP segmentation of alloy micrographs using graph cuts" by Huffman et al., "A quantifiable and automated volume fraction characterization technique for secondary and tertiary γ' precipitates in Ni-based superalloys" by Smith et al. et "Three-dimensional analysis of secondary γ' precipitates in Rene-88 DT and UMF-20 superalloys" by MacSleyne et al. divulguent des procédés de détection de précipité dans un alliage.

Compte tenu de ce qui précède, l'invention a pour objectif de fournir un procédé de détection de précipités dans un alliage qui s'appuie sur un traitement d'image automatisé. L'invention a encore pour objectif de fournir un procédé de détection de précipités dans un alliage qui fournisse des résultats fiables malgré l'inhomogénéité du fond de l'image. Elle vise également à rendre ce procédé exploitable dans le cadre d'un contrôle de la qualité de l'alliage effectué sur un site de production.

### EXPOSÉ DE L'INVENTION

À cet effet, l'invention repose sur un traitement d'image local faisant appel à des paramètres dimensionnels des précipités à détecter. En l'espèce, des évènements potentiels sont détectés dans l'image et la dimension de chaque évènement potentiel est déterminée d'après les caractéristiques locales de l'image autour de cet événement. Il est ensuite vérifié que l'événement présente une dimension compatible avec un précipité à détecter.

Plus précisément, l'invention a pour objet un procédé de détection de précipités dans un alliage par analyse d'une image bidimensionnelle représentant un échantillon formé avec cet alliage, l'image étant formée d'un ensemble de pixels disposés en lignes et en colonnes, chaque pixel étant associé à un niveau de gris, le procédé comprenant :
▪ pour chaque ligne de pixels, une recherche de pics lumineux, chaque pic étant associé à un évènement potentiel, et
▪ pour chaque pic lumineux,
   ∘ une application d'une fonction d'approximation, la fonction d'approximation approchant les niveaux de gris de pixels de la ligne considérée autour dudit pic lumineux,
   ∘ une détermination d'une longueur d'événement potentiel, la longueur d'événement potentiel étant définie entre deux points caractéristiques de la fonction d'approximation, et
   ∘ une comparaison de la longueur d'événement potentiel à une longueur minimale prédéterminée, l'événement potentiel étant considéré comme un précipité de l'alliage si sa longueur est supérieure ou égale à la longueur minimale prédéterminée, et étant ignoré sinon.

L'image bidimensionnelle est typiquement une image obtenue par microscopie électronique, par exemple par microscopie électronique en transmission.

Selon une première forme de réalisation, la recherche de pics lumineux dans une ligne de pixels comprend :
▪ une détermination d'une valeur maximale de niveau de gris parmi les pixels de la ligne considérée,
▪ une détermination d'un seuil de détection local à partir de ladite valeur maximale de niveau de gris, le seuil de détection local étant défini par un pourcentage de la valeur maximale de niveau de gris, et
▪ une détermination des pics lumineux, les pics lumineux étant définis comme l'ensemble des pixels de la ligne pour lesquels la valeur du niveau de gris est supérieure ou égale au seuil de détection local.
Le seuil de détection local est par exemple défini comme étant égal à 50%, 60%, 70%, 75%, 80% ou 90% de la valeur maximale de niveau de gris parmi les pixels de la ligne considérée.

Selon une deuxième forme de réalisation, la recherche de pics lumineux dans une ligne de pixels comprend une détermination d'un nombre prédéterminé de pixels présentant les plus grandes valeurs de niveau de gris, lesdits pixels étant considérés comme les pics lumineux. Le nombre prédéterminé de pixels peut être déterminé en fonction des dimensions de l'échantillon imagé et/ou des capacités de traitement du dispositif mettant en œuvre le procédé de détection. À titre d'illustration, le nombre de pics lumineux peut être égal à 100, 500, 1000 ou 5000.

Avantageusement, la recherche de pics lumineux comprend un filtrage agencé pour identifier comme pic lumineux un unique pixel par précipité effectivement présent dans la ligne de pixels considérée. Pour la première forme de réalisation de la recherche de pics lumineux, le filtrage comprend par exemple, postérieurement à l'étape de détermination des pics lumineux :
▪ un découpage de la ligne de pixels en différents tronçons présentant chacun une longueur prédéterminée, et
▪ une suppression, sur chaque tronçon, des pixels présentant une valeur de niveau de gris inférieure à la valeur maximale de niveau de gris des pixels du tronçon considéré.

La fonction d'approximation est agencée pour suivre au mieux les niveaux de gris des pixels au voisinage du pic lumineux considéré. Elle est par exemple définie à partir de paramètres dont les valeurs sont ajustées individuellement à chaque pic lumineux. La fonction d'approximation est par exemple une fonction gaussienne ou une fonction polynomiale. L'ordre de la fonction polynomiale peut être choisi comme étant égal au nombre de pixels de la ligne considérée ou compris entre 70% et 100% du nombre de pixels de la ligne considérée ; il est par exemple égal à 90% du nombre de pixels de la ligne considérée. En cas de définition de la fonction d'approximation sur un intervalle prédéterminé, l'ordre de la fonction polynomiale peut être choisi comme étant égal au nombre de pixels sur cet intervalle prédéterminé ou compris entre 70% et 100% du nombre de pixels sur cet intervalle prédéterminé ; il est par exemple égal à 90% du nombre de pixels sur l'intervalle prédéterminé. De manière générale, toute fonction de lissage peut être utilisée. La forme gaussienne présente l'avantage d'éliminer efficacement le bruit de mesure.

Selon une forme particulière de réalisation, les points caractéristiques de la fonction d'approximation correspondent à des valeurs minimales de la fonction d'approximation. Pour une fonction gaussienne, les points caractéristiques sont les points correspondant à la base de la courbe de Gauss. Ils sont par exemple déterminés par une valeur de niveau de gris égale à un pourcentage de la valeur de niveau de gris du pic lumineux, typiquement 5% ou 10%.

La fonction d'approximation peut être définie sur un intervalle prédéterminé. L'intervalle prédéterminé définit alors une fenêtre d'analyse sur la ligne de pixels considérée. De préférence, la longueur de l'intervalle prédéterminé est supérieure à une première longueur maximale prédéterminée, cette première longueur maximale prédéterminée correspondant à une longueur maximale d'un précipité dans l'alliage. La longueur maximale d'un précipité dans l'alliage peut être une donnée établie au préalable pour un alliage donné ou être estimée d'après une pré-analyse de l'échantillon.

Afin de conférer un caractère local au traitement réalisé par le procédé de détection, la longueur de l'intervalle est inférieure à la longueur de la ligne de pixels. En particulier, la longueur de l'intervalle prédéterminé peut être inférieure à une deuxième longueur maximale prédéterminée, cette deuxième longueur maximale prédéterminée correspondant au double de la longueur maximale d'un précipité dans l'alliage. Ainsi, la fonction d'approximation est définie sur une longueur inférieure à deux précipités adjacents, et permet donc une discrimination de ces précipités.

L'étape de recherche de pics lumineux est réalisée ligne par ligne, pour chaque ligne de pixel. Un balayage est ainsi effectué selon les lignes de l'image bidimensionnelle. Un tel balayage est suffisant lorsque les précipités présentent globalement une forme sphérique. Néanmoins, ladite étape de recherche de pics lumineux peut être réalisée, en outre, pour chaque colonne de pixels. Autrement dit, un deuxième balayage est effectué selon les colonnes de l'image. Un balayage bidimensionnel, selon les lignes et les colonnes, permet d'identifier des précipités susceptibles de présenter des dimensions distinctes dans deux directions du plan de l'image, c'est-à-dire des précipités de forme allongée.

La recherche de pics lumineux dans une colonne de pixels peut être réalisée de manière identique à celle dans une ligne de pixels. Les étapes suivantes du procédé sont appliquées pour chaque pic lumineux identifié dans une colonne de pixels. En particulier, la fonction d'approximation est appliquée à chaque pic lumineux pour approcher les niveaux de gris de pixels de la colonne considérée autour de ce pic lumineux. Elle peut prendre une forme identique à celle définie pour les lignes de pixels ou une forme différente. Elle est de même préférentiellement définie sur un intervalle prédéterminé dont la longueur est comprise entre la première longueur maximale prédéterminée et la deuxième longueur maximale prédéterminée. Néanmoins, pour un matériau anisotrope, la première longueur maximale prédéterminée et la deuxième longueur maximale prédéterminée peuvent différer selon qu'elles sont considérées pour une ligne ou pour une colonne de pixels.

Le procédé de détection selon l'invention peut comporter, préalablement à la recherche de pics lumineux, un seuillage de l'image, dans lequel le niveau de gris de chaque pixel dont la valeur est inférieure à un seuil prédéterminé est mis à la valeur nulle. Le seuil prédéterminé peut être déterminé empiriquement par un utilisateur ou à l'aide d'un algorithme de seuillage. À titre d'exemple, en utilisant un algorithme d'Otsu, le seuil peut être déterminé de sorte qu'une quantité importante du bruit soit éliminée sans entacher les parties d'intérêt. Cependant, les images dont cette méthode fait l'objet ne permettent pas toujours de déterminer un seuil minimal. Le seuil prédéterminé peut alors être déterminé empiriquement. Il est par exemple fixé à 5% ou 10% de la valeur du niveau de gris maximal pouvant être pris par les pixels. Le seuillage de l'image permet d'accélérer son traitement ultérieur.

L'invention a également pour objet un procédé de détermination d'une propriété mécanique d'un alliage. Le procédé comprend :
▪ une étape de préparation d'un échantillon formé avec cet alliage,
▪ une étape de génération d'une image bidimensionnelle de l'échantillon par microscopie électronique,
▪ une étape d'analyse d'image, dans laquelle le procédé de détection décrit ci-dessus est mis en œuvre sur l'image bidimensionnelle, et
▪ une étape de détermination de la propriété mécanique de l'alliage à partir d'une quantité de précipités détectés dans l'image bidimensionnelle.

La propriété mécanique peut notamment être un module de Young, un module de cisaillement ou une ténacité. La détermination de la propriété mécanique de l'alliage peut s'appuyer sur un modèle liant ladite propriété mécanique à une quantité de précipités dans l'alliage. La quantité de précipités peut être exprimée sous forme de densité surfacique ou volumique.

L'invention a encore pour objet un dispositif de détection de précipités dans un alliage par analyse d'une image bidimensionnelle représentant un échantillon formé avec cet alliage. L'image est formée d'un ensemble de pixels disposés en lignes et en colonnes, chaque pixel étant associé à un niveau de gris. Le dispositif de détection comprend une unité de calcul configurée pour mettre en œuvre le procédé de détection décrit ci-dessus.

L'invention a enfin pour objet un programme d'ordinateur comprenant des instructions qui, lorsque le programme est exécuté par un ordinateur, conduisent celui-ci à mettre en œuvre ledit procédé de détection.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente un exemple de procédé dé détermination d'une propriété mécanique d'un alliage selon l'invention ;
- la figure 2 représente, sur un graphique, les niveaux de gris d'une ligne de pixels dans un exemple d'image bidimensionnelle d'un échantillon d'alliage ;
- la figure 3 illustre une étape d'application d'une fonction d'approximation à un évènement potentiel identifié sur le graphique de la figure 2.

### DESCRIPTION DÉTAILLÉE

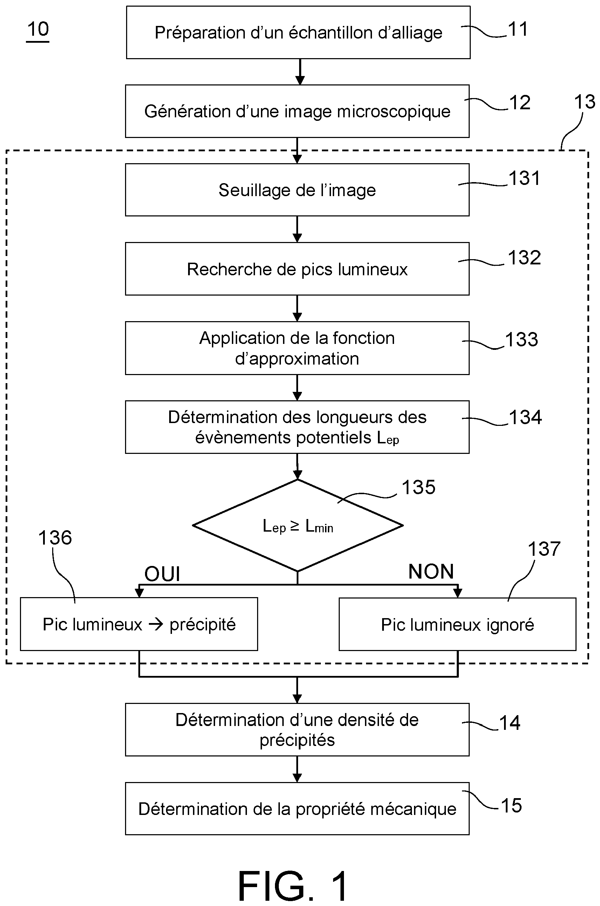

La figure 1 représente un exemple de procédé de détermination d'une propriété mécanique d'un alliage selon l'invention. Le procédé de détermination 10 comprend une étape 11 de préparation d'un échantillon de matériau formé avec l'alliage, une étape 12 de génération d'une image microscopique, un ensemble d'étapes formant un exemple de procédé 13 de détection de précipités dans un alliage selon l'invention, une étape 14 de détermination d'une densité de précipités et une étape 15 de détermination de la propriété mécanique. L'étape 11 de préparation d'un échantillon comprend la formation d'une plaque de matériau apte à être imagée par un microscope électronique. L'échantillon se présente typiquement comme un disque de 3 mm de diamètre et de 100 µm d'épaisseur avec une zone fine d'environ 100 nm dédiée à l'observation. L'étape 12 de génération d'une image microscopique comprend la génération d'une image bidimensionnelle de l'échantillon - en l'occurrence de sa zone fine - par microscopie électronique, par exemple par microscopie électronique en transmission. L'image bidimensionnelle représente par exemple un carré d'échantillon de 500 nm de côté. Elle est formée d'un ensemble de pixels disposés en lignes et en colonnes, chaque pixel étant associé à un niveau de gris. À titre d'exemple, l'image bidimensionnelle peut être formée de 2048 lignes par 2048 colonnes de pixels, et les niveaux de gris quantifiés sur une échelle de 0 à 255.

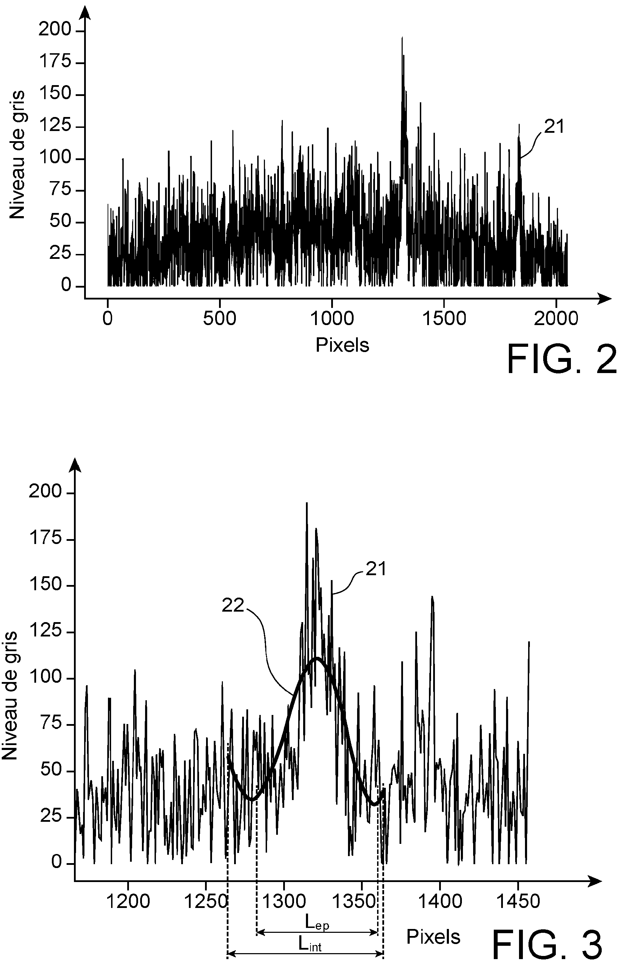

La figure 2 représente, sur un graphique, une courbe 21 représentant les niveaux de gris d'une ligne de pixels dans un exemple d'image bidimensionnelle. L'image bidimensionnelle est formée de 2048 lignes par 2048 colonnes de pixels et les niveaux de gris sont quantifiés sur une échelle de 0 à 255. L'axe des abscisses représente la position des pixels le long de la ligne et l'axe des ordonnées représente la valeur du niveau de gris pour le pixel considéré. Il peut être remarqué qu'en l'absence d'informations dimensionnelles sur les évènements à détecter, en l'espèce des précipités, la recherche de ces évènements par analyse de la courbe 21 est délicate. L'invention remédie à cette difficulté en introduisant un critère dimensionnel dans la recherche les évènements à détecter. En l'occurrence, le critère dimensionnel est une longueur minimale de l'évènement.

Le procédé 13 de détection de précipités comprend une étape 131 de seuillage de l'image, une étape 132 de recherche de pics lumineux, une étape 133 d'application d'une fonction d'approximation, une étape 134 de détermination des longueurs des évènements potentiels, une étape 135 de comparaison des longueurs des évènements potentiels et des étapes 136, 137 de classification des évènements potentiels.

Au cours de l'étape optionnelle 131 de seuillage, le niveau de gris de chaque pixel de l'image bidimensionnelle dont la valeur est inférieure à un seuil prédéterminé est mis à la valeur nulle. Le seuil prédéterminé peut être fixé de manière empirique par un utilisateur. Il correspond par exemple à une valeur inférieure ou égale au niveau de gris d'un précipité dans une zone sombre de l'image.

L'étape 132 de recherche de pics lumineux peut être réalisée de différentes manières. À titre d'exemple, elle comprend :
▪ pour chaque ligne et pour chaque colonne de pixels, une détermination d'une valeur maximale de niveau de gris parmi les pixels de la ligne ou de la colonne considérée ou parmi l'ensemble des pixels de l'image bidimensionnelle,
▪ une détermination d'un seuil de détection local à partir de ladite valeur maximale de niveau de gris, le seuil de détection local étant défini comme étant un pourcentage de la valeur maximale de niveau de gris,
▪ une détermination des pics lumineux, les pics lumineux étant définis comme l'ensemble des pixels de la ligne ou de la colonne considérée pour lesquels la valeur du niveau de gris est supérieure ou égale au seuil de détection local. Ces pics lumineux sont alors associés à des évènements potentiels.
Le seuil de détection local est par exemple défini comme étant égal à 50% de la valeur maximale de niveau de gris de la ligne ou de la colonne considérée.

La figure 3 illustre l'étape 133 d'application d'une fonction d'approximation. Elle représente, sur un graphique analogue à celui de la figure 2, une portion de la courbe 21 comprise entre les pixels 1170 et 1460. L'étape 133 consiste à appliquer une fonction d'approximation à chaque évènement potentiel identifié dans une ligne ou dans une colonne de pixels de l'image bidimensionnelle. Sur le graphique de la figure 3, la fonction d'approximation appliquée au pic lumineux situé au niveau du pixel 1315 est représentée par un graphe 22. L'étape 133 comprend par exemple, pour chaque pic lumineux, la détermination de paramètres d'une fonction de sorte que ses valeurs s'approchent au mieux des niveaux de gris des pixels de la ligne ou de la colonne considérée sur un intervalle prédéterminé. La fonction d'approximation est alors définie sur cet intervalle prédéterminé, lequel définit une fenêtre d'analyse pour chaque pic lumineux. La longueur Lᵢₙₜ de cet intervalle est de préférence supérieure à une longueur maximale Lₘₐₓ d'un précipité dans l'alliage et inférieure au double de cette longueur maximale. Ladite longueur maximale Lₘₐₓ est une donnée déterminée au préalable. Les paramètres de la fonction d'approximation sont déterminés individuellement pour chaque pic lumineux. La fonction d'approximation peut être déterminée par un algorithme de lissage et d'interpolation. Elle peut notamment être une fonction polynomiale ou gaussienne. L'ordre du polynôme peut être choisi comme égal à 90% du nombre de points dans la fenêtre d'analyse. D'une manière générale, plus il est élevé, meilleur est le résultat. Dans l'exemple de la figure 3, la fonction d'approximation est définie par un algorithme de lissage et d'interpolation de type « spline univariée » ou « univariate spline » en anglais, sur un intervalle de 100 pixels, à savoir entre les pixels 1265 et 1365. Ce type d'algorithme de lissage et d'interpolation est notamment décrit dans « Univariate spline quasi-interpolants and applications to numerical analysis » - Paul Sablonnière - INSA and IRMAR, Rennes, 2005. Il est ici mis en œuvre par le package d'analyse SciPy de Community library project.

L'étape 134 de détermination des longueurs des évènements potentiels est appliquée à chaque pic lumineux, c'est-à-dire à chaque évènement potentiel, de manière à déterminer sa longueur Lₑₚ. La longueur Lₑₚ d'un évènement potentiel est définie entre deux points caractéristiques de la fonction d'approximation. Pour une fonction polynomiale, les points caractéristiques sont par exemple les minimas locaux de part et d'autre du pic lumineux. Dans l'exemple de la figure 3, les minimas locaux se situent au niveau des pixels 1280 et 1360. Cette plage de pixels correspond à une longueur de 7,73 nm. Pour une fonction gaussienne, les points caractéristiques sont par exemple déterminés par un pourcentage du niveau de gris du pic lumineux, par exemple 5% ou 10%.

L'étape 135 de comparaison des longueurs des évènements potentiels comprend une comparaison, pour chaque pic lumineux, de la longueur Lₑₚ de l'événement potentiel auquel il est associé à une longueur minimale prédéterminée Lₘᵢₙ. Cette longueur minimale Lₘᵢₙ correspond à la longueur minimale d'un précipité dans l'alliage. Il s'agit également d'une donnée déterminée au préalable. À titre d'exemple, la longueur minimale Lₘᵢₙ peut être de 1,4 nm dans un alliage d'aluminium 6061. Lorsqu'il est déterminé que la longueur Lₑₚ d'un évènement potentiel est supérieure ou égale à la longueur minimale Lₘᵢₙ, il est considéré dans l'étape 136 que ledit évènement potentiel est un précipité de l'alliage. À l'inverse, si la longueur Lₑₚ d'un évènement potentiel est inférieure à la longueur minimale Lₘᵢₙ, il est considéré dans l'étape 137 que ledit évènement potentiel n'est pas un précipité. Le pic lumineux est alors ignoré.

Le procédé 13 de détection de précipités s'appuie ainsi sur deux paramètres dimensionnels afin d'identifier des précipités, à savoir une longueur minimale Lₘᵢₙ et une longueur maximale Lₘₐₓ. Pour pouvoir être identifié, un précipité doit présenter une longueur, suivant une ligne ou une colonne de l'image, située entre ces deux bornes Lₘᵢₙ et Lₘₐₓ.

L'étape 14 de détermination d'une densité de précipités consiste à déterminer une densité surfacique ou volumique de précipités dans l'alliage, c'est-à-dire une quantité de précipités détectés par unité de surface ou de volume.

L'étape 15 de détermination de la propriété mécanique consiste à déterminer une propriété mécanique de l'alliage à partir de la densité de précipités déterminée à l'étape 14. La propriété mécanique est par exemple un module de Young, un module de cisaillement ou une ténacité. Elle peut être déterminée à l'aide d'un modèle prédéterminé liant ladite propriété mécanique à une densité de précipités dans l'alliage.

## Revendications

1. Procédé de détection de précipités dans un alliage par analyse d'une image bidimensionnelle représentant un échantillon formé avec cet alliage, l'image étant formée d'un ensemble de pixels disposés en lignes et en colonnes, chaque pixel étant associé à un niveau de gris, **caractérisé en ce que** le procédé (13) comprend:
▪ pour chaque ligne de pixels, une recherche (132) de pics lumineux, chaque pic étant associé à un évènement potentiel,
▪ pour chaque pic lumineux :
∘ une application (133) d'une fonction d'approximation, la fonction d'approximation approchant les niveaux de gris de pixels de la ligne considérée autour dudit pic lumineux,
∘ une détermination (134) d'une longueur d'événement potentiel (Lₑₚ), la longueur d'événement potentiel étant définie entre deux points caractéristiques de la fonction d'approximation, et
∘ une comparaison (135) de la longueur d'événement potentiel (Lₑₚ) à une longueur minimale prédéterminée (Lₘᵢₙ), l'évènement potentiel étant considéré comme un précipité de l'alliage si sa longueur est supérieure ou égale à la longueur minimale prédéterminée, et étant ignoré sinon.

2. Procédé de détection selon la revendication 1, dans lequel la fonction d'approximation est une fonction gaussienne ou une fonction polynomiale.

3. Procédé de détection selon l'une des revendications 1 et 2, dans lequel les points caractéristiques de la fonction d'approximation correspondent à des valeurs minimales de la fonction d'approximation.

4. Procédé de détection selon l'une des revendications précédentes, dans lequel la fonction d'approximation est définie sur un intervalle prédéterminé, une longueur (Lᵢₙₜ) de l'intervalle prédéterminé étant supérieure à une première longueur maximale prédéterminée, la première longueur maximale prédéterminée correspondant à une longueur maximale d'un précipité dans l'alliage.

5. Procédé de détection selon la revendication 4, dans lequel la longueur (Lᵢₙₜ) de l'intervalle prédéterminé est inférieure à une deuxième longueur maximale prédéterminée, la deuxième longueur maximale prédéterminée correspondant au double de la longueur maximale d'un précipité dans l'alliage.

6. Procédé de détection selon l'une des revendications précédentes, dans lequel l'étape (132) de recherche de pics lumineux est réalisée, en outre, pour chaque colonne de pixels, la fonction d'approximation étant ensuite appliquée à chaque pic lumineux pour approcher les niveaux de gris de pixels de la colonne considérée autour de ce pic lumineux.

7. Procédé de détection selon l'une des revendications précédentes comprenant, préalablement à la recherche de pics lumineux, un seuillage de l'image (131), le niveau de gris de chaque pixel dont la valeur est inférieure à un seuil prédéterminé étant mis à la valeur nulle.

8. Procédé de détermination d'une propriété mécanique d'un alliage, le procédé (10) comprenant :
▪ une étape (11) de préparation d'un échantillon formé avec cet alliage,
▪ une étape (12) de génération d'une image bidimensionnelle de l'échantillon par microscopie électronique,
▪ une étape d'analyse d'image, dans laquelle le procédé (13) de détection selon l'une des revendications 1 à 7 est mis en œuvre sur l'image bidimensionnelle, et
▪ une étape (15) de détermination de la propriété mécanique de l'alliage à partir d'une quantité de précipités détectés dans l'image bidimensionnelle.

9. Dispositif de détection de précipités dans un alliage par analyse d'une image bidimensionnelle représentant un échantillon formé avec cet alliage, l'image étant formée d'un ensemble de pixels disposés en lignes et en colonnes, chaque pixel étant associé à un niveau de gris, le dispositif de détection comprenant une unité de calcul configurée pour mettre en œuvre le procédé de détection (13) selon l'une des revendications 1 à 7.

10. Programme d'ordinateur comprenant des instructions qui, lorsque le programme est exécuté par un ordinateur, conduisent celui-ci à mettre en œuvre le procédé de détection (13) selon l'une des revendications 1 à 7.

## Patentansprüche

1. Verfahren zum Erkennen von Präzipitationen in einer Legierung durch Analysieren eines zweidimensionalen Bildes, das eine mit dieser Legierung gebildete Probe darstellt, wobei das Bild aus einem Satz von in Zeilen und Spalten angeordneten Pixeln besteht und jedes Pixel einer Graustufe zugeordnet ist, **dadurch gekennzeichnet, dass** das Verfahren (13) umfasst:
▪ für jede Zeile von Pixeln Suchen (132) nach Lichtspitzen, wobei jede Spitze einem potenziellen Ereignis zugeordnet ist,
▪ für jede Lichtspitze:
∘ Anwenden (133) einer Näherungsfunktion, wobei die Näherungsfunktion die Graustufen von Pixeln der betrachteten Zeile um die Lichtspitze herum annähert,
∘ Bestimmen (134) der Länge eines potentiellen Ereignisses (Lₑₚ), wobei die Länge des potentiellen Ereignisses zwischen zwei Kennpunkten der Näherungsfunktion definiert ist, und
∘ Vergleichen (135) der Länge des potentiellen Ereignisses (Lₑₚ) mit einer vorbestimmten Minimallänge (Lₘᵢₙ), wobei das potentielle Ereignis als Präzipitation der Legierung betrachtet wird, wenn seine Länge größer oder gleich der vorbestimmten Minimallänge ist, und ansonsten ignoriert wird.

2. Erkennungsverfahren nach Anspruch 1 , wobei die Näherungsfunktion eine Gaußfunktion oder eine Polynomfunktion ist.

3. Erkennungsverfahren nach einem der Ansprüche 1 und 2, wobei die Kennpunkte der Näherungsfunktion den Minimalwerten der Näherungsfunktion entsprechen.

4. Erkennungsverfahren nach einem der vorhergehenden Ansprüche, wobei die Näherungsfunktion über ein vorbestimmtes Intervall definiert ist, wobei eine Länge (Lᵢₙₜ) des vorbestimmten Intervalls größer als eine erste vorbestimmte Maximallänge ist, wobei die erste vorbestimmte Maximallänge einer Maximallänge einer Präzipitation in der Legierung entspricht.

5. Erkennungsverfahren nach Anspruch 4, wobei die Länge (Lᵢₙₜ) des vorbestimmten Intervalls kleiner ist als eine zweite vorbestimmte Maximallänge, wobei die zweite vorbestimmte Maximallänge der zweifachen Maximallänge einer Präzipitation in der Legierung entspricht.

6. Erkennungsverfahren nach einem der vorhergehenden Ansprüche, wobei der Schritt (132) des Suchens nach Lichtspitzen ferner für jede Spalte von Pixeln durchgeführt wird, wobei die Näherungsfunktion dann auf jede Lichtspitze angewendet wird, um die Graustufen der Pixel der betrachteten Spalte um diese Lichtspitze herum anzunähern.

7. Erkennungsverfahren nach einem der vorhergehenden Ansprüche, umfassend vor der Suche nach Lichtspitzen eine Schwellenwertbildung für das Bild (131), wobei die Graustufe jedes Pixels mit kleinerem Wert als ein vorgegebener Schwellenwert auf den Wert Null gesetzt wird.

8. Verfahren zum Bestimmen einer mechanischen Eigenschaft einer Legierung, wobei das Verfahren (10) umfasst:
▪ einen Schritt (11) des Bereitstellens einer mit dieser Legierung gebildeten Probe,
▪ einen Schritt (12) des Erzeugens eines zweidimensionalen Bildes der Probe durch Elektronenmikroskopie,
▪ einen Schritt der Bildanalyse, wobei das Erkennungsverfahren (13) nach einem der Ansprüche 1 bis 7 am zweidimensionalen Bild durchgeführt wird, und
▪ einen Schritt (15) des Bestimmens der mechanischen Eigenschaft der Legierung aus einer Menge von im zweidimensionalen Bild erkannten Präzipitationen.

9. Vorrichtung zum Erkennen von Präzipitationen in einer Legierung durch Analysieren eines zweidimensionalen Bildes, das eine mit dieser Legierung gebildete Probe darstellt, wobei das Bild aus einem Satz von in Zeilen und Spalten angeordneten Pixeln besteht, wobei jedes Pixel einer Graustufe zugeordnet ist, wobei die Erkennungsvorrichtung eine Recheneinheit enthält, die dazu ausgelegt ist, das Erkennungsverfahren (13) nach einem der Ansprüche 1 bis 7 durchzuführen.

10. Computerprogramm mit Anweisungen, die, wenn das Programm von einem Computer ausgeführt wird, den Computer veranlassen, das Erkennungsverfahren (13) nach einem der Ansprüche 1 bis 7 durchzuführen.

## Claims

1. A method for detecting precipitates in an alloy by analysing a two-dimensional image representing a sample formed with this alloy, the image being formed by a set of pixels arranged in rows and columns, each pixel being associated with a grey level, **characterised in that** the method (13) comprises:
▪ for each pixel row, searching (132) for luminous peaks, each peak being associated with a potential event,
▪ for each luminous peak:
∘ applying (133) an approximation function, the approximation function approximating the grey levels of pixels of the row considered around said luminous peak,
∘ determining (134) a potential event length (Lₑₚ), the potential event length being defined between two characteristic points of the approximation function, and
∘ comparing (135) the potential event length (Lₑₚ) to a predetermined minimum length (Lₘᵢₙ), the potential event being considered as a precipitate of the alloy if its length is greater than or equal to the predetermined minimum length, and being ignored otherwise.

2. The detection method according to claim 1, wherein the approximation function is a Gaussian function or polynomial function.

3. The detection method according to one of claims 1 to 2, wherein the characteristic points of the approximation function correspond to minimum values of the approximation function.

4. The detection method according to one of the preceding claims, wherein the approximation function is defined over a predetermined interval, a length (Lᵢₙₜ) of the predetermined interval being greater than a first predetermined maximum length, the first predetermined maximum length corresponding to a maximum length of a precipitate in the alloy.

5. The detection method according to claim 4, wherein the length (Lᵢₙₜ) of the predetermined interval is shorter than a second predetermined maximum length, the second predetermined maximum length corresponding to twice the maximum length of a precipitate in the alloy.

6. The detection method according to one of the preceding claims, wherein the step (132) of searching for luminous peaks is further performed for each pixel column, the approximation function being then applied to each luminous peak to approximate the grey levels of pixels of the column considered around this luminous peak.

7. The detection method according to one of the preceding claims, comprising, prior to searching for luminous peaks, thresholding the image (131), the grey level of each pixel the value of which is lower than a predetermined threshold being set to the zero value.

8. A method for determining a mechanical property of an alloy, the method (10) comprising:
▪ a step (11) of preparing a sample formed with this alloy,
▪ a step (12) of generating a two-dimensional image of the sample by electron microscopy,
▪ an image analysis step, in which the detection method (13) according to one of claims 1 to 7 is implemented on the two-dimensional image, and
▪ a step (15) of determining the mechanical property of the alloy from an amount of precipitates detected in the two-dimensional image.

9. A device for detecting precipitates in an alloy by analysing a two-dimensional image representing a sample formed with this alloy, the image being formed by a set of pixels arranged in rows and columns, each pixel being associated with a grey level, the detection device comprising a computing unit configured to implement the detection method (13) according to one of claims 1 to 7.

10. A computer program comprising instructions which, when the program is run by a computer, cause the latter to implement the detection method (13) according to one of claims 1 to 7.
